(19) **Europäisches Patentamt**

**European Patent Office**

**Office européen des brevets**

(11) **EP 1 076 616 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(51) Int Cl.⁷: **B60K 41/00**

(21) Anmeldenummer: **99929066.1**

(22) Anmeldetag: **30.04.1999**

(86) Internationale Anmeldenummer:
**PCT/DE99/01281**

(87) Internationale Veröffentlichungsnummer:
**WO 99/056979 (11.11.1999 Gazette 1999/45)**

(54) **ANTRIEBSSTRANGSTEUERUNG EINES KRAFTFAHRZEUGS**

DRIVE TRAIN CONTROL OF A MOTOR VEHICLE

COMMANDE D'ENSEMBLE TRANSMISSION D'UN VEHICULE AUTOMOBILE

(84) Benannte Vertragsstaaten:
**FR GB IT**

(30) Priorität: **30.04.1998 DE 19819463**

(43) Veröffentlichungstag der Anmeldung:
**21.02.2001 Patentblatt 2001/08**

(73) Patentinhaber: **SIEMENS AKTIENGESELLSCHAFT**
**80333 München (DE)**

(72) Erfinder:
- **GRAF, Friedrich**
  **D-93049 Regensburg (DE)**
- **GUTKNECHT-STÖHR, Florian**
  **D-93047 Regensburg (DE)**
- **LACHMAYR, Martin**
  **D-93055 Regensburg (DE)**

(56) Entgegenhaltungen:
**DE-A- 3 334 722**      **DE-A- 19 625 936**

**Beschreibung**

Die Erfindung betrifft eine Antriebsstrangsteuerung eines Kraftfahrzeugs mit einem Motor und einem automatischen Getriebe, die versehen ist mit

- einer Motorsteuerung, durch die das Motordrehmoment beeinflussende Größen gesteuert werden,
- einer Getriebesteuerung, durch die die Übersetzung des automatischen Getriebes gesteuert wird, und
- einem Kennfeldspeicher,

    - aus dem die von der Getriebesteuerung einzustellende Sollübersetzung in Abhängigkeit einerseits von einem von dem Fahrer angeforderten Drehmoment und andererseits von einer funktionell mit der Fahrzeuggeschwindigkeit verbundenen Größe entnehmbar ist, und

- dessen Kennlinien fahrzeugabhängig festgelegt sind.

Die gattungsbildente EP 0 576 703 A zeigt so eine Antriebsstrangsteuerung.

Eine derartige Antriebsstrangsteuerung schließt ein einen Motor und eine Motorsteuerung, durch die Größen gesteuert werden, die das Motordrehmoment beeinflussen, wie z.B. der Zündzeitpunkt und die Kraftstoffzumessung zu den Zylindern. Sie schließt außerdem ein automatisches Getriebe ein und eine Getriebesteuerung, durch die die Schaltvorgänge des automatischen Getriebes gesteuert werden. In einem oder mehreren Kennfeldspeichern sind die von der Getriebesteuerung verwendeten Schaltpunkte des Getriebes abgelegt (z.B. WO 91/13780).

Bei praktisch allen bekannten automatischen Getriebesteuerungen wird der jeweils einzulegende Gang über Schaltkennlinien ausgewählt, die in Form einer Funktion oder Abhängigkeit von der Fahrzeuggeschwindigkeit und der Stellung des Fahrpedals oder der Drosselklappe in einem Kennfeldspeicher abgelegt sind. Beim Festlegen der Schaltkennlinien wird vorausgesetzt, daß eine bestimmte Fahrpedal- oder Drosselklappenstellung mit einem bestimmten Arbeitspunkt des Motors fest korreliert. Dies bezieht sich sowohl auf das abgegebene Drehmoment als auch auf den dabei auftretenden Kraftstoffverbrauch.

Diese Voraussetzung führt aber zu Schwierigkeiten, wenn die Stellung des Fahrpedals oder der Drosselklappe nicht in einer eindeutigen Beziehung zu dem Motordrehmoment steht. Dies ist z.B. der Fall, wenn ein Motor unterschiedliche Betriebsmoden aufweist. Bei der Benzindirekteinspritzung z.B. wird im Magerbetrieb die Leistung oder das Drehmoment über die Einspritzzeit bestimmt, wobei die Drosselklappe voll geöffnet ist. Bei normalem Betrieb mit λ=1 dagegen werden die Leistung und das Drehmoment über den Drosselklappenwinkel eingestellt. Bei Dieselmotoren gibt es überhaupt keine Drosselklappe, hier erfolgt die Drehmomenteinstellung nur über die Einspritzzeit.

Ein anderes Beispiel für eine nicht vorhandene Korrelation von abgegebenem Motordrehmoment und einem Betriebsparameter des Motors ist die Fahrpedalstellung bei einer elektronisch gesteuerten Drosselklappe (ETC). Mit einer solchen Drosselklappe lassen sich eine Vielzahl von Funktionen realisieren, in denen eine Fahrpedalstellung je nach Betriebszustand unterschiedliche Motordrehmomente hervorruft. So wird etwa bei langsamen Fahrzeuggeschwindigkeiten und kleiner Fahrpedalauslenkung eine geringere Empfindlichkeit vorgegeben, um das Rangieren und Einparken zu erleichtern. Auch bei Schaltvorgängen im Getriebe wird das Motordrehmoment unabhängig von der Fahrpedalstellung verändert, um das Raddrehmoment zu stabilisieren.

Eine ebenfalls bekannte Antriebsstrangsteuerung eines Kraftfahrzeugs mit einem Motor und einem automatischen Getriebe (JP-OS 7-89373 mit JP-Abstract) ist versehen mit einer Motorsteuerung, durch die das Motordrehmoment beeinflussende Größen gesteuert werden, mit einer Getriebesteuerung, durch die die Schaltvorgänge des automatischen Getriebes gesteuert werden, und mit einem Kennfeldspeicher, in dem von der Getriebesteuerung verwendete Schaltpunkte des Getriebes in Abhängigkeit von der Fahrzeuggeschwindigkeit und von dem Motordrehmoment abgelegt sind. Der Kennfeldspeicher tauscht mit der Motorsteuerung keine Informationen aus. Insbesondere erhält die Getriebesteuerung keine Information über das maximale Motordrehmoment und die maximal verfügbare Drehmomentreserve. Dem Kennfeldspeicher werden lediglich Informationen von Sensoren oder Detektoren für das Motordrehmoment und die Fahrzeuggeschwindigkeit zugeführt.

Die vorstehend genannten Fälle führen zu einem unangepaßten Schaltverhalten, wenn sich die beim Festlegen der Schaltkennlinien vorausgesetzte Motorcharakteristik, d.h. ein vorgegebenes konstantes Verhalten des Motors, real verändert.

Der Erfindung liegt die Aufgabe zugrunde, das Motorverhalten von den Schaltkennlinien zu trennen, d. h. eine von der Motorcharakteristik weitgehend unabhängige Festlegung der Schaltkennlinien für das Getriebe zu schaffen.

Diese Aufgabe wird erfindungsgemäß durch die Antriebsstrangsteuerung nach Anspruch 1 gelöst. Diese Antriebsstrangsteuerung eines Kraftfahrzeugs mit einem Motor und einem automatischen Getriebe ist versehen mit einer Motorsteuerung, durch die das Motordrehmoment beeinflussende Größen gesteuert werden, mit einer Getriebesteuerung, durch die die Übersetzung des automatischen Getriebes gesteuert wird, und mit einem Kennfeldspeicher, aus dem die von der Getriebesteuerung einzustellende Sollübersetzung in Abhängigkeit von einem von dem Fahrer angeforderten Drehmoment und von dem maximal Möglichen Drehmoment sowie von einer funktionell mit der Fahrzeuggeschwindigkeit verbundenen Größe entnehmbar ist, und dessen Kennlinien fahrzeugabhängig festgelegt sind.

Zweckmäßige Weiterbildungen der Erfindung sind in den Unteransprüchen niedergelegt.

Einige Vorteile der Erfindung sind, daß sie es ermöglicht, in Zusammenhang mit der Gangwahl auf der Grundlage der erfindungsgemäß festgelegten Schaltkennlinien typische Parameter für das erzeugte Motordrehmoment zu finden. Die Motorcharakteristik kann mit signifikanten Größen von der Motorsteuerung an die Getriebesteuerung in komprimierter Form, d.h. mit sehr wenigen Daten, übermittelt werden, um beide Systeme möglichst weitgehend zu entkoppeln. Die Schaltkennlinien werden möglichst unabhängig von dem Motor definiert, sie enthalten kein Drehmomentmodell des Motors.

Die Motorcharakteristik konzentriert sich auf die Schnittstelle zwischen Getriebe und Motor. Die Schaltkennlinien erkennen dadurch in großem Umfang motorunabhängig definiert werden. Damit entfällt die Notwendigkeit, sie an unterschiedliche Motortypen individuell anzupassen. Dies führt bei der schon heute zu beobachtenden und zukünftig vermehrt zu erwartenden Vielzahl der Optionen für ein Fahrzeug - der sogenannten einheitlichen Plattform mit unterschiedlichen Motor- und Getriebeausstattungen - zu einer beachtlichen Verringerung des Entwicklungsaufwands für die Antriebsstrangsteuerung. Des weiteren ermöglicht die Erfindung eine durchgängig drehmomentbasierte Steuerung des Antriebsstrangs, die mit der zunehmenden Einführung von elektronisch gesteuerten Drosselklappen und der sogenannten Drehmomentschnittstelle weite Verbreitung finden wird. Die Schnittstelle zwischen dem Motor und dem Getriebe lassen sich so gestalten, daß spezifische Charakteristiken der Bestandteile jeweils nur in dem betreffenden System vorliegen.

Wie erwähnt, gibt es Fälle, wo man bei denen ein Motor je nach Betriebsart unterschiedliche Charakteristik aufweist (z.B. bei Benzindirekteinspritzung). Bei herkömmlichen Getriebesteuerungen führt dies zu aufwendigen Lösungen mit im Extremfall einer Verdoppelung der Schaltkennfelder. Bei adaptiven Getriebesteuerungen sind heutzutage schon bis zu 10 unterschiedliche Schaltkennfelder erforderlich. Dieser Aufwand wird durch die Erfindung wirkungsvoll verringert.

Der Fahrereindruck, d. h. der Eindruck, den der Fahrer von dem Verhalten und der Leistungsfähigkeit des Antriebsstrangs bekommt, wird wesentlich von der Drehmomentreserve bestimmt. Dabei wird dem Fahrer das Gefühlt vermittelt, wieviel Fahrleistungsreserve noch aktuell zur Verfügung steht (bis zur maximal verfügbaren Leistung), um zum Beispiel das Fahrzeug zu beschleunigen oder eine Steigung mit gleicher Geschwindigkeit zu befahren. Besonders vorteilhaft ist die Erfindung, weil mit ihr dieser Fahrereindruck auf andere Fahrzeuge mit anderen Motorvarianten ohne Aufwand übertragen werden kann.

Darüber hinaus lassen sich besondere Betriebsmodi des Motors (zum Beispiel ein ausgesprochen kraftstoffsparender Modus), die eine spezielle Motorcharakteristik zur Folge haben, ohne weiteres berücksichtigen. Liegt dabei ein verringertes maximales Motordrehmoment vor, so erfolgen die Rückschaltungen früher, ohne dass dazu ein spezieller Satz von Kennlinien vorgesehen werden müsste.

Ausführungsbeispiele der Erfindung werden im folgenden anhand der Zeichnung erläutert. Es zeigen:

| | |
|---|---|
| Figur 1 | ein vereinfachtes Schaltkennfeld zur Erläuterung der Erfindung; |
| Figur 2 | einen Antriebsstrang eines Kraftfahrzeugs mit einer erfindungsgemäßen Antriebsstrangsteuerung; |
| Figur 3 | eine erfindungsgemäße Antriebsstrangsteuerung in Blockdiagrammdarstellung; |
| Figur 4 | eine Schaltpunktermittlungsschaltung der Antriebsstrangsteuerung gemäß Figur 3; |
| Figuren 5 bis 9 | Ausführungsbeispiele von Kennlinien für die Antriebsstrangsteuerung nach Figur 3, und |
| Figur 10 | ein Struktogramm eines in der Antriebsstrangsteuerung nach Figur 3 und 6 abgearbeiteten Programms. |

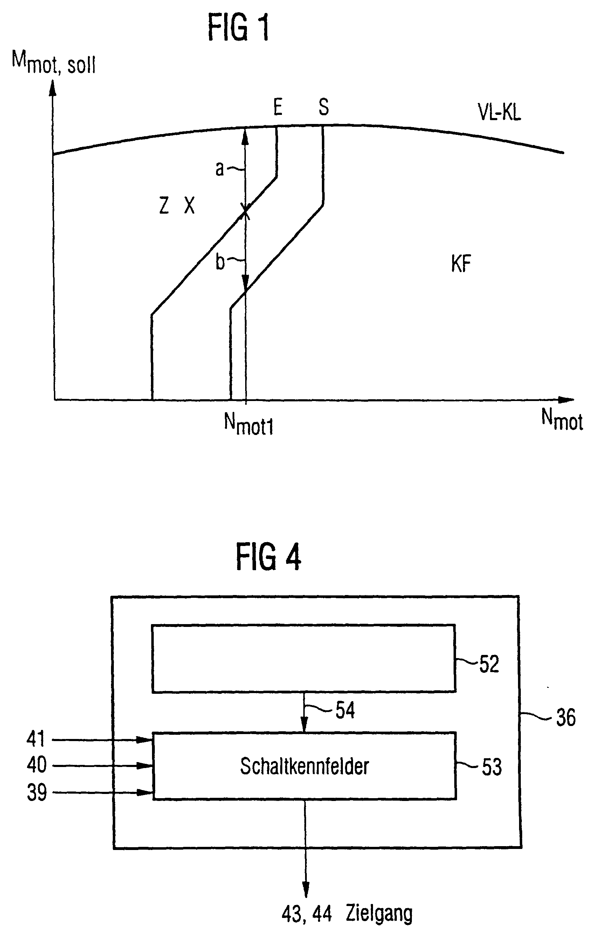

In einem Motorkennfeld KF (Figur 1), sind zur übersichtlicheren Darstellung und einfacheren Erläuterung lediglich zwei Schaltkennlinien dargestellt: Eine Schaltkennlinie E für eine ökonomische, kraftstoffsparende Fahrweise und eine Kennlinie S für eine leistungsorientierte, sportliche Fahrweise. Auf der Ordinate des Kennfelds ist das vom Fahrer angeforderte Motordrehmoment oder Soll-Motordrehmoment $M_{mot,soll}$ aufgetragen, das der Motor - mit einer gewissen Verzögerung - bereitstellen kann. Auf der Abszisse des Diagramms ist die Motordrehzahl $N_{mot}$ aufgetragen. Die Kennlinien E und S legen die Schaltpunkte des Economy- beziehungsweise des Sport-Schaltprogramms fest. Diese Schaltpunkte sind normalerweise auf die Fahrzeuggeschwindigkeit $V_{faurzeug,x}$ bezogen, sie lassen sich aber wegen der (bei konstanter Übersetzung) Proportionalität zwischen der Fahrzeuggeschwindigkeit und der Motordrehzahl in das Motorkennfeld übertragen. Eine Vollastkennlinie VL-KL gibt das jeweils maximale Motordrehmoment an.

Eine Hochschaltung wird beim Überschreiten der Schaltkennlinie von rechts nach links ausgelöst. Aus der Zeichnung ist ersichtlich, daß eine den Kraftstoffverbrauch minimierende Fahrstrategie oder Fahrweise zu einem Schaltvorgang bei kleineren Motordrehzahlen oder Fahrzeuggeschwindigkeiten führt als eine sportliche Fahrweise. Dies führt dazu, daß der Motorbetriebspunkt dabei recht nahe an dem verbrauchsoptimierten Betriebsbereich liegt, der in der Zeichnung stark vereinfacht durch sein Zentrum Z angedeutet ist.

Bei einer Fahrzeuggeschwindigkeit oder Motordrehzahl $N_{mot1}$ ist bei einer ökonomischen Fahrstrategie maximale Drehmomentenreserve (kürzer: Momentenreserve)

$$M_{res} = M_{mot,max} - M_{fahrer,soll,min} = a \qquad (I)$$

Ist hingegen das fahrleistungsoptimierte Schaltprogramm der Getriebesteuerung aktiv, so beträgt die Momentenreserve

$$M_{Res} = M_{mot,max} - M_{fahrer,soll,min} = a + b \qquad (II)$$

Diese Momentenreserve bei vorgegebenem Getriebegang ist größer als die bei ökonomischer Fahrstrategie. Sie macht sich durch ein besseres Beschleunigungsvermögen bemerkbar, da einerseits in dem Bereich b des Motorkennfelds KF bei fahrleistungsorientiertem Schaltprogramm noch keine Hochschaltung erfolgt, andererseits aber mehr Motordrehmoment mobilisiert werden kann.

Die Momentenreserve ist eines der Hauptkriterien für die erfindungsgemäße Auslegung von Schaltkennfeldern. Sie wird in mehr verbrauchsorientierten Anwendungen geringer ausfallen, in fahrleistungsorientierten Schaltprogrammen dagegen größer sein, da hier die Hochschaltung erst "später", also bei einem höheren Motordrehmoment und einer höheren Motordrehzahl stattfindet. Auch bei für eine Bergauffahrt ausgelegten Schaltprogrammen wird die Schaltung erst bei höherer Motorund Abtriebsdrehzahl erfolgen, um ein sogenanntes Schaltpendeln zu vermeiden. Eine adaptive Getriebesteuerung ist in der Lage, eine Auswahl zwischen den verschiedenen Schaltprogrammen automatisch, ohne Intervention des Fahrers vorzunehmen (EP 0 576 703 B2).

Die Drehmomentreserve ist eine Charakteristikum, das bei Kenntnis des augenblicklichen - von der Motordrehzahl oder dem Motorzustand abhängigen - maximal möglichen Motordrehmoments $M_{mot,max}$ nur mehr von der Fahrsituation, und damit von dem selektierten Schaltkennfeld, und dem von dem Fahrer angeforderten Motordrehmoment $M_{fahrer,soll}$ (t) abhängt. Die Festlegung des Schaltkennfelds ist somit nur noch fahrzeugabhängig.

Die aus dem Schaltkennfeld entnommene oder berechnete Größe Momentenreserve hat eine physikalische Dimension, was ihre Einbindung in die Betrachtung des ganzen Antriebsstrangs erleichtert, und zwar im Gegensatz zu bekannten Antriebsstrangsteuerungen, die direkt die Fahrpedalstellung auswerten.

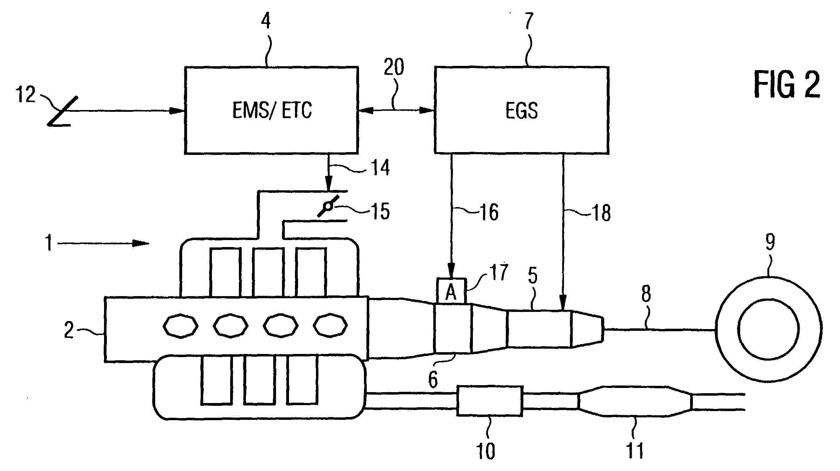

Ein schematisch dargestellter Antriebsstrang 1 (Figur 2) eines Kraftfahrzeugs schließt ein: einen Motor 2 mit einer elektronischen Motorsteuerung 4, die auch die Funktion einer Antriebsschlupfregelung ETC durchführen kann, ein automatisches Getriebe 5 mit einem Drehmomentwandler 6 und einer elektronischen Getriebesteuerung 7. Der Radantrieb ist durch eine Gelenkwelle 8 und ein angetriebenes Rad 9 angedeutet, die Abgasanlage durch einen Katalysator 10 und einen Schalldämpfer 11.

Über ein Gaspedal 12 übermittelt der Fahrer seine Wünsche an die Motorsteuerung 4, die ihrerseits den Motor entsprechend steuert. Angedeutet ist das durch eine Signalleitung 14, die eine Drosselklappe 15 verstellt. Nicht dargestellt sind, da ebenfalls allgemein bekannt, die Steuerung des Einspritzzeitpunkts und der in den Motor eingespritzten Kraftstoffmenge.

Die Getriebesteuerung steuert über eine Signalleitung 16 eine Überbrückungskupplung 17 für den Drehmomentwandler 6 und über eine Signalleitung 18 die Übersetzung des Getriebes 5. Die Motorsteuerung 4 und die Getriebesteuerung 7 sind durch bidirektionale Signal- und Steuerleitungen 20, zum Beispiel in Form eines Datenbusses, miteinander verbunden und tauschen über diese Datenleitungen Informationen aus, die für einen komfortablen und ökonomischen Fahrbetrieb des Kraftfahrzeugs nötig sind.

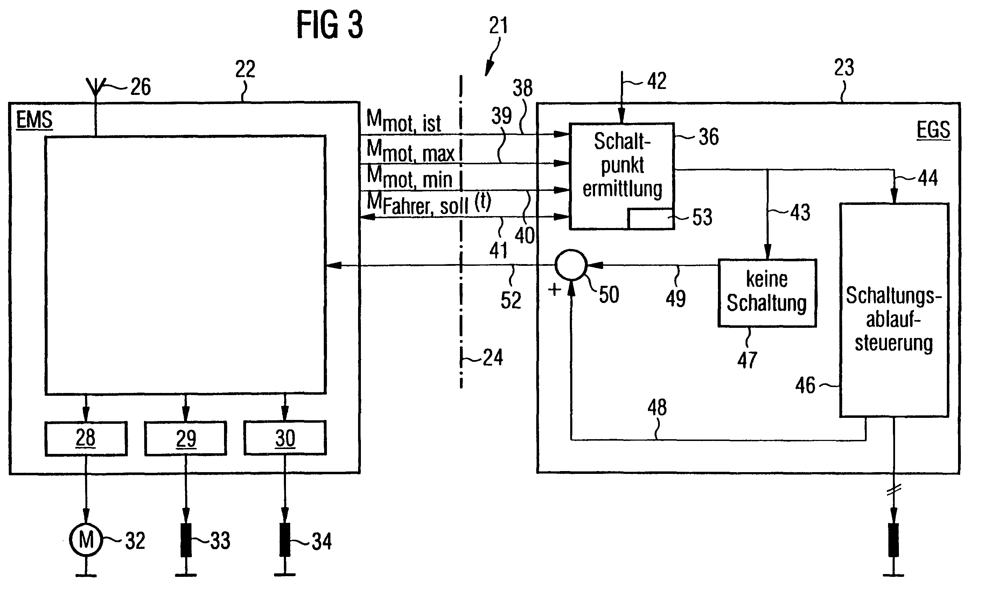

Eine schematisch dargestellte Antriebsstrangsteuerung 21 (Figur 3) eines Kraftfahrzeugs enthält eine elektronische Motorsteuerung (abgekürzt: EMS) 22 und eine elektronische Getriebesteuerung (EGS) 23, die untereinander über eine schematisch angedeutete Schnittstelle 24 kommunizieren, indem sie Daten über Betriebsgrößen des Kraftfahrzeugs und Steuersignale, insbesondere in Form von physikalischen Beschreibungsgrößen, untereinander austauschen.

Die Motorsteuerung 22 empfängt über eine Leitung 26 Signale von dem Fahrpedal 12 und sie enthält drei Steuersignalausgaben: eine Signalausgabe 28 für die Drosselklappe, eine Signalausgabe 29 für die Kraftstoffeinspritzung und eine Signalausgabe 30 zum Steuern des Zündwinkels eines hier nicht weiter dargestellten Motors eines Kraftfahrzeugs. Über die Signalausgabe 28 wird ein die Drosselklappe des Kraftfahrzeugs betätigender Elektromotor 32 gesteuert. Über die Signalausgaben 29 und 30 werden Aktoren 33 beziehungsweise 34 (die zum Beispiel als piezoelektrische oder induktive Aktoren ausgeführt sind) gesteuert, die die einzuspritzende Kraftstoffmenge und den Zündwinkel des Motors einstellen.

Die Getriebesteuerung 23 enthält folgende Bestandteile: eine Schaltpunktermittlung 36, die über Leitungen 38 bis 40 von der Motorsteuerung 22 noch zu erläuternde Daten, zum Beispiel über Werte des Motordrehmoments (oder Motormoments) erhält. Über eine Leitung 41 erhält sie eine Information des von dem Fahrer des Kraftfahrzeugs vorgegebene Motorsollmoment $M_{mot, soll}$. Über eine Leitung 42 empfängt die Schaltpunktermittlung 36 die jeweilige Abtriebsdrehzahl des Getriebes $N_{ab}$, die der Raddrehzahl und damit - bei einem vorgegebenen Übersetzungsverhältnis - der Geschwindigkeit des Kraftfahrzeugs $V_{Fzg,x}$ entspricht. Über eine sich verzweigende Signalleitung 43, 44 sendet die Schaltpunktermittlung 36 einen Schaltbefehl an eine Schaltungsablaufsteuerung 46 und an eine Entscheidungsschaltung 47. Die Leitungen 38 bis 41, soweit sie vorhanden sind, sind Elemente der Schnittstelle 24.

Die Schaltungsablaufsteuerung 46 ist über eine Leitung 48 und die Entscheidungsschaltung 47 über eine Leitung 49 mit je einem Eingang eines Addierglieds oder Summationspunkts 50 verbunden. Die Schaltungsablaufsteuerung 46 übermittelt über die Leitung 48, das Addierglied 50 und eine Leitung 52 an die Motorsteuerung 22 die Amplitude oder Intensität der Verstellung des Motordrehmoments sowie Informationen über den zeitlichen Verlauf. Das Addierglied 50 kann auch in der Motorsteuerung 2 enthalten sein.

Innerhalb der Antriebsstrangsteuerung 21 fließen Signale und Steuerinformationen wie folgt: Über die Leitung 41 wird die Information über das von dem Fahrer des Kraftfahrzeugs angeforderten Motordrehmoment $M_{fahrer,soll}$ (t) und über die Leitungen 40 sowie 39 Informationen über das bei der augenblicklichen Motordrehzahl vorliegende minimale Motordrehmoment $M_{mot,min}$(t) beziehungsweise maximale Motordrehmoment $M_{mot,max}$(t) von der Motorsteuerung 22 an die Getriebesteuerung 23 übertragen. In der Information $M_{mot,max}$(t) können alle Verluste, einschließlich weiterer Drehmomentverbraucher nach der Kurbelwelle - wie Klimaanlage, Servolenkung usw. - berücksichtigt sein, um das real maximal mögliche Getriebeeingangsmoment $M_{an,max}$ auszudrücken.

Das tatsächlich vorhandene Motordrehmoment wird über die Leitung 38 von der Motorsteuerung 23 an die Getriebesteuerung 22 übertragen. Auch hier können mögliche Drehmomentsenken am Motor berücksichtigt werden, indem sie vom erzeugten Motordrehmoment subtrahiert werden.

In der Schaltpunktermittlungs(schaltung) 36 wird anhand der vorgenannten Daten der erforderliche Schaltpunkt für das Getriebe ermittelt. Die Schaltpunktermittlung oder Gangauswahl erfolgt adaptiv, indem in Abhängigkeit von dem Fahrstil des jeweiligen Fahrers und dem Fahrzustand des Kraftfahrzeugs ein geeignetes Kennfeld ausgewählt oder auch ein Grundkennfeld entsprechend modifiziert wird. Durch die Entscheidungsschaltung 47 kann das Motordrehmoment außerhalb der Schaltung beeinflußt werden. Die Schaltungsablaufsteuerung 46 steuert den Gangwechsel selbst, sie kann dazu auch das Motordrehmoment während des Schaltvorgangs beeinflussen. Die von der Entscheidungsschaltung 47 und der Schaltungsablaufsteuerung 46 erzeugten Steuersignale werden über die Leitungen 48 und 49 zu dem Addierglied 50 geführt und dort zu einem Eingriffssignal zusammengefaßt, das über die Leitung 52 an die Motorsteuerung 22 übertragen wird.

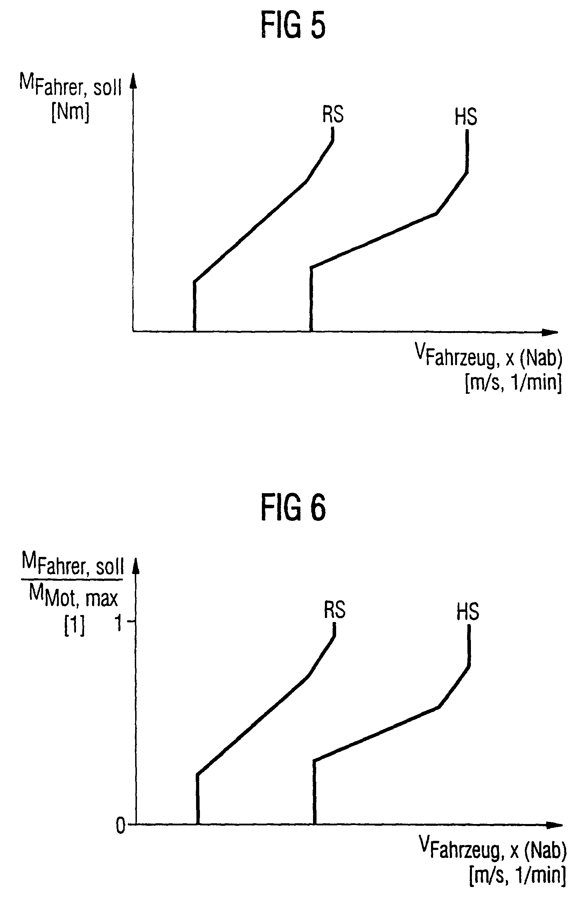

Die Schaltpunktermittlung 36 (Figur 4) enthält eine Adaptionsschaltung 52 und einen Kennfeldspeicher 53, in dem mehrere Schaltkennfelder abgelegt sind. Der Kennfeldspeicher 53 ist als Schaltkennfeldspeicher ausgebildet ist und enthält die Schaltpunkte des Getriebes - oder bei einem stufenlosen Getriebe (CVT-Getriebe): die Sollübersetzung - in Form einer Abhängigkeit von oder als Funktion des Motordrehmoment und der Motordrehzahl. (Einzelheiten hierzu werden anhand der Figuren 5 bis 9 erläutert.)

Die Adaptionsschaltung 52 wählt über eine Leitung 54 ein Schaltkennfeld aus dem Kennfeldspeicher 53 aus, oder aber verschiebt einzelne Schaltkennlinien. Eine Verschiebung der Schaltkennlinien (vgl. Figur 1) nach rechts, das heißt zu größeren Schaltdrehzahlen, bewirkt eine größere Momentenreserve. Die über die Leitungen 39 bis 41 übertragenen - anhand von Figur 3 erläuterten - Signale beeinflussen den Schaltvorgang wie bereits erläutert. Über die Leitungen 43, 44 wird der Zielgang, das heißt der von dem Getriebe einzulegende Gang - oder allgemeiner: die einzustellende Übersetzung i des Getriebes -, ausgegeben.

Zur Festlegung der Koordinatenachsen eines die Schaltpunkte in Form von Schaltkennlinien enthaltenden Schaltkennfelds gibt es mehrere Möglichkeiten.

**[0039]** - Die Ordinate stellt das vom Fahrer angeforderte Motordrehmoment $M_{fahrer,soll}$ dar (Figur 5). Auf der Abszisse ist die Fahrzeuggeschwindigkeit $V_{fahrzeug,x}$ aufgetragen, die der Abtriebsdrehzahl $N_{ab}$ des Getriebes entspricht. Dargestellt sind eine Hochschaltkennlinie HS und eine Rückschaltkennlinie RS. Vorausgesetzt wird, daß das vom Fahrer angeforderte Motordrehmoment $M_{fahrer,soll}$ von dem Motor 2 geliefert werden kann. In diesem Fall muß bei der Auslegung der Schaltkennlinien noch das maximal mögliche Motordrehmoment einbezogen werden, da es als aktualisierter Parameter von der Motorsteuerung 22 nicht benutzt wird.

- Eine andere Möglichkeit ist, das aktuelle Motordrehmoment durch eine Division durch das maximal möglich Motordrehmoment zu normieren und den dabei gebildeten dimensionslosen Quotienten als Ordinate des Kennfelds zu verwenden (Figur 6):

$$K_{res,inv} = M_{fahrer,soll} (t) / M_{mot,max}(t) \qquad (III)$$

Diese Darstellung läßt eine weitergehende Verallgemeinerung zu, da das maximal mögliche Motordrehmoment bei der Auslegung der Schaltkennlinien nicht einbezogen werden muß; es wird vielmehr als aktualisierter Parameter von der Motorsteuerung 22 geliefert.

Die Momentenreserve (vgl. Figur 1) läßt sich motorseitig auf das so dargestellte Schaltkennfeld derart übertragen, daß ein Schaltpunkt durch die Fahrzeuggeschwindigkeit und den Quotienten $K_{res,inv}$ festgelegt wird, der das Verhältnis von aktuellem und maximal möglichem Motordrehmoment darstellt. In anderen Worten, bei einer Anforderung von beispielsweise mehr als 50% des maximal möglichen Motordrehmoments wird bei einer Fahrzeuggeschwindigkeit x eine Rückschaltung festgelegt. Dadurch wird eine Verallgemeinerung des so fixierten Schaltverhaltens ermöglicht, das für mehrere unterschiedliche Motoren geeignet ist, und zwar mit einem Schaltverhalten, das der Fahrer als gleich empfindet, da die Fahrbarkeitsreserven jeweils in einem Gang relativ gleich groß sind.

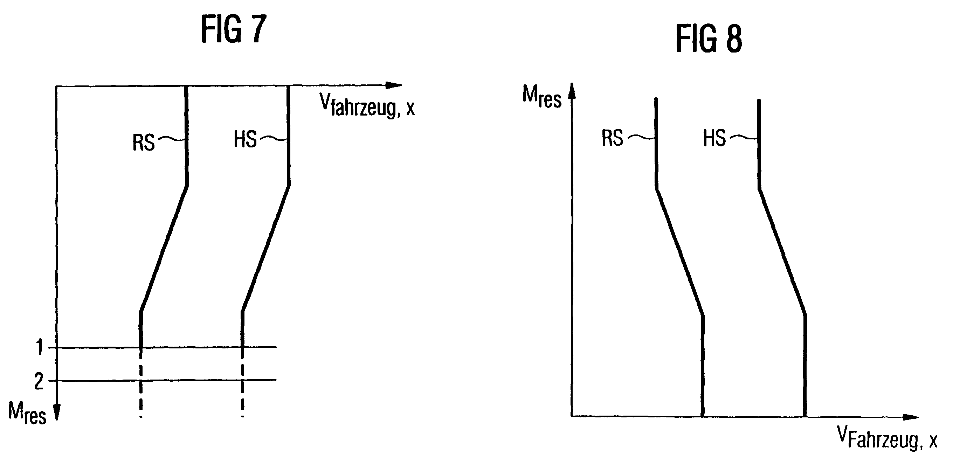

- Eine weitere Variante stellt die Schaltkennlinien als Funktion der Fahrzeuggeschwindigkeit und der Momentenreserve dar (Figur 7). Eine Berechnung erfolgt in der Schaltpunktermittlung 25:

$$M_{res} = M_{mot,max} (t) - M_{fahrer,soll} (t) \qquad (IV)$$

Die erforderlichen Daten werden von der Motorsteuerung 2 ständig aktualisiert.

In der Figur 7 sind die Schaltkennlinien in der gewohnten Form dargestellt, dazu muß aber die Momentenreserve $M_{res}$ in unüblicher Weise skaliert werden, da zum Beispiel bei maximalem Reservemoment keine Drehmomentanforderung des Fahrers vorliegt, diese also null ist. Eine solche Darstellung hat den Vorteil, motorunabhängig zu sein, da die maximale Momentenreserve nicht bekannt sein muß und die Schaltkennlinien übertragbar sind. Im Falle eines Motors mit einem größeren maximalen Drehmoment wird die Ordinate und damit auch die Schaltkennlinie nach unten bis zu einem Wert $M_{res2}$ verlängert, was geeignete Interpolationsverfahren zur Ermittlung der Schaltdrehzahl zulassen. Rückschaltungen finden dann bei einer größeren Motormomentanforderung $M_{fahrer,soll}(t)$ statt.

Figur 8 stellt den gleichen Sachverhalt wie Figur 7 dar, allerdings bei umgekehrter Skalierung des Reservemoments.

Analog zu der Festlegung der Schaltkennlinien nach den Figuren 7 oder 8 lassen sich die Schaltkennlinien (oder: Schaltlinien) auch als Funktion der Fahrzeuggeschwindigkeit $V_{fahrzeug,x}$ und des Reservemoments $M_{rad,res}$ an einem angetriebenen Rad definieren (Figur 9), wobei das Raddrehmoment rechnerisch auf ein Rad zusammengefaßt wird:

$$M_{rad,res} (t) = M_{rad,max} (t) - M_{rad,fahrer} (t) \qquad (V)$$

$$M_{rad,max} (t) = M_{mot,max} (t) * i \qquad (VI)$$

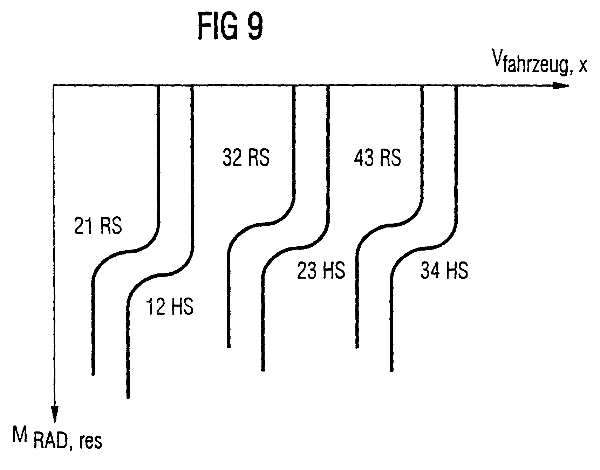

wobei i die jeweils durch den eingelegten Gang mechanisch bestimmte Übersetzung des Getriebes ist (sie entspricht dem Zielgang von Figur 6). Diese Lösung (Figur 9) eignet sich besonders für Systeme mit koordiniertem Antriebsstrang-Management (auch als IPM bezeichnet), die die Fahrpedalstellung als Soll-Radmoment interpretieren. Wegen der Multiplikation des Motordrehmoments mit der Getriebeübersetzung sind die Schaltkennlinien entlang der Ordinate von Figur 9 unterschiedlich lang.

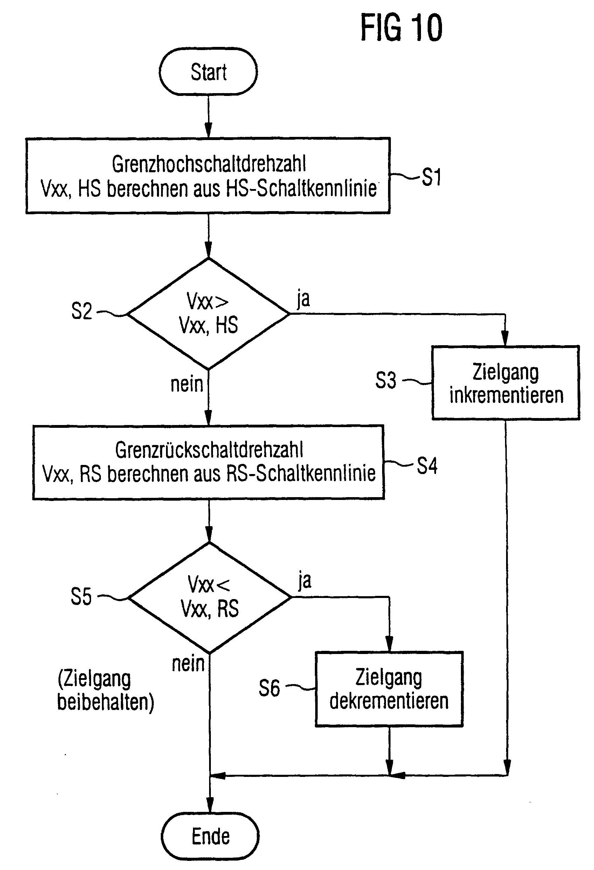

Zum Festlegen der Übersetzung des Getriebes oder, gleichbedeutend, des Zielgangs wird in der Antriebsstrangsteuerung folgendes Programm abgearbeitet (Figur 10).

Nach dem Start wird in einem Schritt S1 aus dem Ordinatenwert der in dem Kennfeld abgelegten Hochschaltkennlinie HS eine Grenzdrehzahl berechnet. Die Berechnung gilt für alle Alternativen nach den Figuren 4, 5, 7, 8 und 9 und sie ist demzufolge drehmomentbasiert. Die Berechnung der Hochschaltkennlinien und der Rückschaltkennlinien RS erfolgt analog.

In einem Schritt S2 wird die Grenzdrehzahl $V_{xx,HS}$ mit der jeweils aktuellen Fahrzeuggeschwindigkeit $V_{xx}$ verglichen. Ist $V_{xx} > V_{xx,HS}$, wird in einem Schritt S3 der Zielgang erhöht. Andernfalls wird in einem Schritt S4 eine Grenzrückschaltdrehzahl $V_{xx,RS}$ aus der Rückschaltkennlinie RS berechnet. In einem Schritt S5 werden diese beiden Werte miteinander verglichen.

Ist $V_{xx} > V_{xx,RS}$, so wird in einem Schritt S6 der Zielgang um eins verringert. Andernfalls wird der Zielgang beibehalten.

Danach ist der Programmdurchlauf an seinem Ende angelangt.

Aus dem Ablaufdiagramm von Figur 10 ergibt sich, daß der von der Schaltpunktermittlung 36 ausgegebene Zielgang immer beibehalten wird, wenn keine Schaltkennlinie überschritten wird. Führt die Getriebesteuerung 23 eine adaptive Anpassung des Schaltverhaltens an den Fahrstil des Fahrers oder die Fahrsituation durch, so wird für die gemäß Figur 10 durchgeführte Schaltpunktermittlung die Schaltkennlinie des jeweils aktiven Schaltkennfeldes (z. B. für sportliches oder ökonomisches Fahren, für Bergauffahrt, für schnelle Autobahnfahrt usw.) verwendet.

## Patentansprüche

1. Antriebsstrangsteuerung (21) eines Kraftfahrzeugs mit einem Motor (2) und einem automatischen Getriebe (5), die versehen ist mit

   - einer Motorsteuerung (22), durch die das Motordrehmoment beeinflussende Größen gesteuert werden,
   - einer Getriebesteuerung (23), durch die die Übersetzung des automatischen Getriebes gesteuert wird, und
   - einem Kennfeldspeicher (53), aus dem die von der Getriebesteuerung (23) einzustellende Sollübersetzung in Abhängigkeit von einem von dem Fahrer angeforderten Drehmoment und von dem maximal möglichen Drehmoment sowie von einer funktionell mit der Fahrzeuggeschwindigkeit verbundenen Größe entnehmbar ist, und dessen Kennlinien fahrzeugabhängig festgelegt sind.

**2.** Antriebsstrangsteuerung nach Anspruch 1, **dadurch gekennzeichnet, daß** der Kennfeldspeicher (53) die Übersetzung des Getriebes (5) als Funktion der verfügbaren Drehmomentreserve ($M_{rad,res}$) und der Abtriebsdrehzahl ($N_{ab}$) des Getriebes (5) enthält.

**3.** Antriebsstrangsteuerung nach Anspruch 1, **dadurch gekennzeichnet, daß** der Kennfeldspeicher (53) die Übersetzung des Getriebes (5) als Funktion der verfügbaren Drehmomentreserve ($M_{rad,res}$) und der Fahrzeuggeschwindigkeit ($V_{fahrzeug,x}$) enthält.

**4.** Antriebsstrangsteuerung nach Anspruch 1, **dadurch gekennzeichnet, daß** der Kennfeldspeicher (53) die Schaltpunkte in Form einer Funktion der an einem angetriebenen Rad zur Verfügung stehenden Drehmomentreserve ($M_{res}$) und der Motordrehzahl ($N_{mot}$) enthält.

**5.** Antriebsstrangsteuerung nach Anspruch 1, **dadurch gekennzeichnet, daß** der Kennfeldspeicher (53) die Schaltpunkte abhängig von einem normierten Motordrehmoment ($K_{res,inv}$) enthält.

**6.** Antriebsstrangsteuerung nach Anspruch 5, **dadurch gekennzeichnet, daß** das normierte Motordrehmoment als Quotient ($M_{fahrer,soll}(t)$ / $M_{mot,max}$ (t)) des aktuellen Motordrehmoments durch das maximal mögliche Motordrehmoment festgelegt ist.

**7.** Antriebsstrangsteuerung nach einem der vorhergehenden Ansprüche, **dadurch gekennzeichnet, daß** sie mehrere die Übersetzung des Getriebes enthaltende Kennfeldspeicher (53) aufweist, und daß eine Adaptionsschaltung (52) vorgesehen ist, durch die in Abhängigkeit von dem Fahrzustands jeweils einer dieser Kennfeldspeicher zur Festlegung der Übersetzung bestimmt wird.

**Claims**

**1.** Drive train control unit (21) of a motor vehicle with an engine (2) and an automatic gearbox (5) which has

- an engine control unit (22) used to control the variables affecting the engine torque,
- a gearbox control unit (23) used to control the ratio of the automatic gearbox, and

- a characteristics memory (53), from which the desired ratio to be set by the gearbox control unit (23) can be determined as a function of a torque requested by the driver and of the maximum possible torque, as well as of a variable which is functionally connected to the speed of the vehicle, and whose characteristics are determined as a function of the vehicle.

**2.** Drive train control unit according to Claim 1, **characterised in that** the characteristics memory (53) contains the ratio of the gearbox (5) as a function of the available reserve torque ($M_{rad,res}$) and of the drive speed ($N_{ab}$) of the gearbox (5).

**3.** Drive train control unit according to Claim 1, **characterised in that** the characteristics memory (53) contains the ratio of the gearbox (5) as a function of the available reserve torque ($M_{rad,res}$) and of the vehicle speed ($V_{fahrzeug,x}$).

**4.** Drive train control unit according to Claim 1, **characterised in that** the characteristics memory (53) contains the shift points in the form of a function of the reserve torque ($M_{res}$) and of the engine speed ($N_{mot}$) available on a driven wheel.

**5.** Drive train control unit according to Claim 1, **characterised in that** the characteristics memory (53) contains the shift points as a function of a standardised engine torque ($K_{res,inv}$).

**6.** Drive train control unit according to Claim 5, **characterised in that** the standardised engine torque is determined as a quotient ($M_{fahrer,soll}$ (t) / $M_{mot,max}$ (t)) of the current engine torque divided by the maximum possible engine torque.

**7.** Drive train control unit according to one of the preceding claims, **characterised in that** it has a plurality of characteristics memories (53) containing the ratio of the gearbox, and that an adapter circuit (52) is provided, by means of which one of these characteristics memories is defined for determining the ratio as a function of the vehicle status in each case.

**Revendications**

**1.** Commande de chaîne cinématique (21) d'un véhicule automobile comportant un moteur (2) et une boîte de vitesses automatique (5), ladite commande étant pourvue

- d'une commande de moteur (22) qui commande des paramètres influant sur le couple moteur,

- d'une commande de boîte de vitesses (23) qui commande le rapport de transmission de la boîte de vitesses automatique, et
- d'une mémoire de tables caractéristiques (53) dans laquelle peut être prélevé le rapport de transmission de consigne à établir par la commande de boîte de vitesses (23) en fonction d'un couple sollicité par le conducteur et du couple maximal possible ainsi que d'un paramètre lié, d'un point de vue fonctionnel, à la vitesse du véhicule, mémoire dont les courbes caractéristiques sont déterminées en fonction du type de véhicule.

2. Commande de chaîne cinématique selon la revendication 1, **caractérisée en ce que** la mémoire de tables caractéristiques (53) contient le rapport de transmission de la boîte de vitesses (5) en tant que fonction de la réserve de couple disponible ($M_{rad,res}$) et de la vitesse de rotation de sortie ($N_{ab}$) de la boîte de vitesses (5).

3. Commande de chaîne cinématique selon la revendication 1, **caractérisée en ce que** la mémoire de tables caractéristiques (53) contient le rapport de transmission de la boîte de vitesses (5) en tant que fonction de la réserve de couple disponible ($M_{rad,res}$) et de la vitesse ($V_{fahrzeug,x}$) du véhicule.

4. Commande de chaîne cinématique selon la revendication 1, **caractérisée en ce que** la mémoire de tables caractéristiques (53) contient les points de commutation sous la forme d'une fonction de la réserve de couple ($M_{res}$) disponible sur une roue entraînée et de la vitesse de rotation ($N_{mot}$) du moteur.

5. Commande de chaîne cinématique selon la revendication 1, **caractérisée en ce que** la mémoire de tables caractéristiques (53) contient les points de commutation en fonction d'un couple moteur normé ($K_{res,inv}$).

6. Commande de chaîne cinématique selon la revendication 5, **caractérisée en ce que** le couple moteur normé est déterminé comme quotient ($M_{fahrer,soll}(t) / M_{mot,max}(t)$) du couple moteur actuel divisé par le couple moteur maximal possible.

7. Commande de chaîne cinématique selon l'une quelconque des revendications précédentes, **caractérisée en ce qu'**elle présente plusieurs mémoires de tables caractéristiques (53) contenant les rapports de transmission de la boîte de vitesses, et **en ce qu'**un circuit d'adaptation (52) est prévu pour sélectionner chaque fois, l'une de ces mémoires de tables caractéristiques en vue de fixer le rapport de transmission.

## FIG 1

$M_{mot, soll}$

E    S    VL-KL

a⁓

Z  X

b⁓

KF

$N_{mot1}$    $N_{mot}$

## FIG 4

52

⁓54

41 →
40 →
39 →    Schaltkennfelder    ⁓53

⁓36

43, 44  Zielgang

FIG 2

# FIG 3

EMS

EGS

$M_{mot, ist}$

$M_{mot, max}$

$M_{mot, min}$

$M_{Fahrer, soll}$ (t)

Schalt-punkt ermittlung

keine Schaltung

Schaltungs-ablauf-steuerung

EP 1 076 616 B1

# FIG 5

# FIG 6

# FIG 7

RS

HS

$V_{fahrzeug, x}$

1

2

$M_{res}$

# FIG 8

$M_{res}$

RS

HS

$V_{Fahrzeug, x}$

EP 1 076 616 B1

# FIG 9

$V_{fahrzeug, x}$

32 RS

43 RS

21 RS

23 HS

34 HS

12 HS

$M_{RAD, res}$

EP 1 076 616 B1

# FIG 10